# FASCICULE DE BREVET EUROPEEN

(11) **EP 0 549 777 B1**
(45) Date de publication et mention de la délivrance du brevet: **01.05.1996**
(21) Numéro de dépôt: 92916154.5
(22) Date de dépôt: 17.07.1992
(51) Int. Cl.: A01D 34/74, A01D 34/82

(54) **TONDEUSE A GAZON**
RASENMÄHER
LAWN MOWER

(30) Priorité: 18.07.1991 FR 9109313
(43) Date de publication de la demande: 07.07.1993
(73) Titulaire: CREATIONS DELERY S.A.R.L., F-01600 Reyrieux (FR); S.A. KUBOTA EUROPE, F-95100 Argenteuil (FR)
(72) Inventeur: DELERY, Marc, F-01600 Trévoux (FR); FURATA, Teruhisa, F-95230 Soisy-sur-Montmorency (FR); HARRIS, Alistair, F-69100 Villeurbanne (FR); VAUGRENTE, Alain, F-92700 Colombes (FR)
(74) Mandataire: Laurent, Michel
(86) Numéro de dépôt international: FR9200695
(87) Numéro de publication internationale: WO9301706

(56) Documents cités:
- EP-A- 0 032 968
- EP-A- 0 047 502
- EP-A- 0 304 903
- DE-C- 3 627 208
- GB-A- 2 054 333
- US-A- 3 759 023
- US-A- 4 041 679
- US-A- 4 905 463

## Description

La présente invention concerne un perfectionnement apporté aux tondeuses à gazon, et plus particulièrement aux tondeuses dites "auto-tractées".

Les tondeuses à gazon auto-tractées sont constituées par des ensembles similaires à un petit chariot que l'opérateur commande et dirige devant lui en marchant, au moyen d'un ensemble que l'on pourrait qualifier de "palonnier" de direction.

De telles tondeuses de conception relativement simples, comportent donc essentiellement un cadre support pour l'ensemble des organes actifs (couteaux, turbines permettant d'assurer le transfert de l'herbe coupée dans une enceinte de stockage (sac), moteur d'entrainement de ces organes), ledit châssis étant équipé de roues, dont deux sont motrices, pour assurer les déplacements de l'engin sur le sol.

Il est bien connu que dans de tels ensembles, il doit être possible de régler la hauteur de coupe. Pour ce faire, la solution la plus répandue consiste à monter les roues sur le châssis par l'intermédiaire d'ensembles de type "crémaillère", permettant ainsi d'éloigner plus ou moins la lame de coupe du niveau du sol. Une telle solution, simple et efficace, présente cependant comme inconvénient majeur d'être la cause d'accidents fréquents, conséquence du fait que, notamment lorsque l'ensemble est en position relevée, l'organe de coupe peut projeter vers l'extérieur les pierres qui peuvent se trouver en surface du sol et, qu'également, l'espace devient suffisant pour qu'une personne (manipulateur ou tiers) puisse passer le pied en dessous de l'ensemble de coupe, un tel risque n'étant pas éliminé même par l'adaptation de carters de protection périphériques, étant donné que lesdits carters sont déplacés simultanément avec l'organe de coupe, et que donc ils se trouvent à une distance variable par rapport au sol.

Le GB-A-2 054 333 qui montre les caractéristiques du préambule de la revendication 1, décrit une solution permettant de résoudre ce problème de sécurité lorsque l'on écarte l'organe de coupe par rapport au sol et qui consiste, d'une manière générale, à monter latéralement, sur l'axe des roues, des protections latérales fixes. Pour faire varier la hauteur de coupe, on utilise, comme rappelé précédemment, des ensembles de type "crémaillère" permettant d'agir individuellement sur chaque roue, et permettant donc de déplacer les roues par rapport à l'ensemble de coupe. Une telle solution, si elle résoud le problème de sécurité, conduit cependant à une réalisation complexe. De plus, les protections latérales étant disposées à l'extérieur des roues, on augmente d'encombrement en largeur et les zones de coupe se trouvent réduites sur les côtés, ce qui peut poser des problèmes dans certaines zones, par exemple lorsque l'on doit réaliser une tonte le long d'un mur.

Pour résoudre le problème du réglage de la hauteur de coupe, il a été proposé dans le DE-C-3 627 208 d'utiliser un système de leviers pivotants actionnable simultanément, ce qui évite d'avoir à intervenir indépendamment sur chacune des roues, comme dans les solutions conventionnelles rappelées précédemment.

Un telle solution complique cependant l'entraînement des roues motrices et ne permet pas de résoudre le problème de la sécurité.

Enfin, il convient de noter que les tondeuses commercialisées à ce jour sont très bruyantes, et que leur conception même ne permet pas d'y adapter aisément des capots insonorisants.

Or on a trouvé, et c'est ce qui fait l'objet de la présente invention, un perfectionnement apporté à de telles tondeuses auto-tractées, qui permet de résoudre l'ensemble de ces inconvénients et qui, par ailleurs, simplifie notablement la commande de l'entraînement des roues motrices que comportent de tels engins.

D'une manière générale, l'invention concerne donc un nouveau type de tondeuse à gazon auto-tractée, constituée essentiellement d'un châssis support fixe monté sur des roues permettant d'en assurer les déplacements et sur lequel sont montés l'ensemble des organes permettant de réaliser l'opération de coupe, et dans lequel :
- les roues sont entourées au moins sur les deux faces latérales de la tondeuse par des jupes protectrices fixes, qui s'étendent pratiquement jusqu'au niveau du sol ;
- des moyens permettent de positionner les organes de coupe en hauteur par rapport au sol, et ce entre deux positions, l'une basse correspondant à une hauteur de coupe minimum, l'autre haute à une hauteur de coupe maximum, la distance entre ces deux positions variant en général entre dix millimètres et soixante millimètres ;
et elle se caractérise en ce que :
- les jupes protectrices sont solidaires du châssis support fixe ;
- le réglage de la hauteur de coupe est réalisé en déplaçant verticalement par rapport au châssis fixe supportant les roues l'ensemble des moyens permettant de réaliser l'opération de coupe, à savoir bloc moteur, tête de coupe et turbine, transmission aux roues motrices, ensemble qui est monté sur un châssis ou plateau mobile déplaçable verticalement par rapport au châssis support fixe supportant les roues, la liaison entre ces éléments étant réalisée par l'intermédiaire de leviers basculants pivotant sur le châssis support fixe, et permettant de déplacer verticalement le châssis ou plateau mobile par rapport au châssis support fixe supportant les roues, le point de pivotement entre le châssis ou plateau mobile et le levier se déplaçant en suivant la périphérie d'un cercle centré sur l'axe des roues motrices ;
- la transmission du mouvement aux roues motrices est réalisée par l'intermédiaire d'un pignon moteur en prise avec une couronne dentée disposée à l'intérieur de chaque roue motrice et déplaçable avec le châssis ou plateau mobile en suivant le diamètre primitif de la couronne dentée.

Grâce à un tel ensemble dans lequel tous les moyens nécessaires à la réalisation de l'opération de coupe, sont montés sur un châssis ou plateau déplaçable verticalement par rapport au châssis support fixe supportant les roues, il est possible non seulement de modifier pratiquement instantanément la hauteur de coupe, mais également d'avoir une transmission aux roues motrices très simple, ainsi qu'une sécurité parfaite quelle que soit la hauteur de coupe compte tenu de la présence des jupes latérales de protection qui, elles, ne sont pas déplacées par rapport au sol.

Les déplacements relatifs entre le châssis support fixe et le châssis mobile, peuvent être commandés par tous moyens appropriés ; selon une forme de réalisation simple, ces deux éléments seront maintenus normalement écartés l'un de l'autre en position relevée sous l'action d'un ressort ou vérin, l'abaissement étant obtenu au moyen d'un ensemble actionné par l'utilisateur, poignée par exemple, comprimant lesdits éléments, des moyens de verrouillage en position étant bien entendu prévus.

Par ailleurs, un tel type de tondeuse peut être facilement insonorisée en réalisant les jupes latérales sous forme de caissons, et en entourant les éléments placés sur le châssis mobile par un capot, également en forme de caisson insonorisant, qui vient s'emboiter autour de la partie supérieure des jupes latérales fixes.

Enfin, selon un mode préférentiel de réalisation qui sera décrit plus en détail dans la suite de la description, les longerons du châssis support fixe supportant les roues constituent en eux-mêmes les jupes latérales protectrices et insonorisantes.

L'invention et les avantages qu'elle apporte seront cependant mieux compris grâce à l'exemple de réalisation décrit ci-après à titre indicatif, mais non limitatif, et qui est illustré par les schémas annexés dans lesquels :
- les figures 1, 2 et 3 sont respectivement des vues de côté en élévation, de dessus et en coupe transversale vue de l'arrière, de l'ensemble d'une tondeuse à gazon réalisée conformément à l'invention, les éléments de coupe étant représentés en position la plus basse ;
- les figures 4 et 5 sont des vues similaires aux figures 1 et 2 d'une telle tondeuse avec les éléments de coupe représentés en position relevée, permettant une hauteur de coupe maximum.

Si l'on se reporte aux schémas annexés, la tondeuse conforme à l'invention est constituée par un châssis support fixe monté sur des roues (1a,1b,2a,2b) qui permettent d'en assurer les déplacements, et sur lequel sont montés l'ensemble des organes permettant de réaliser l'opération de coupe.

Conformément à l'invention, les roues (1a,1b,2a,2b) sont montés sur un cadre fixe constitué dans le cas présent de deux traverses (3a,3b) reliant respectivement les roues avant (1a,1b) et arrière (2a,2b) entre elles, et d'éléments (6a,6b), formant des longerons. Dans l'exemple illustré, les éléments (6a,6b) formant les longerons constituent deux jupes protectrices (6a,6b) fixes, qui s'étendent pratiquement jusqu'au niveau du sol. Ces jupes protectrices sont de préférence réalisées sous la forme de caissons moulés, remplis d'une mousse ou similaire, permettant d'assurer l'insonorisation. Bien entendu, il pourrait être envisagé de rapporter des jupes protectrices (6a,6b) fixes sur un cadre préalablement formé.

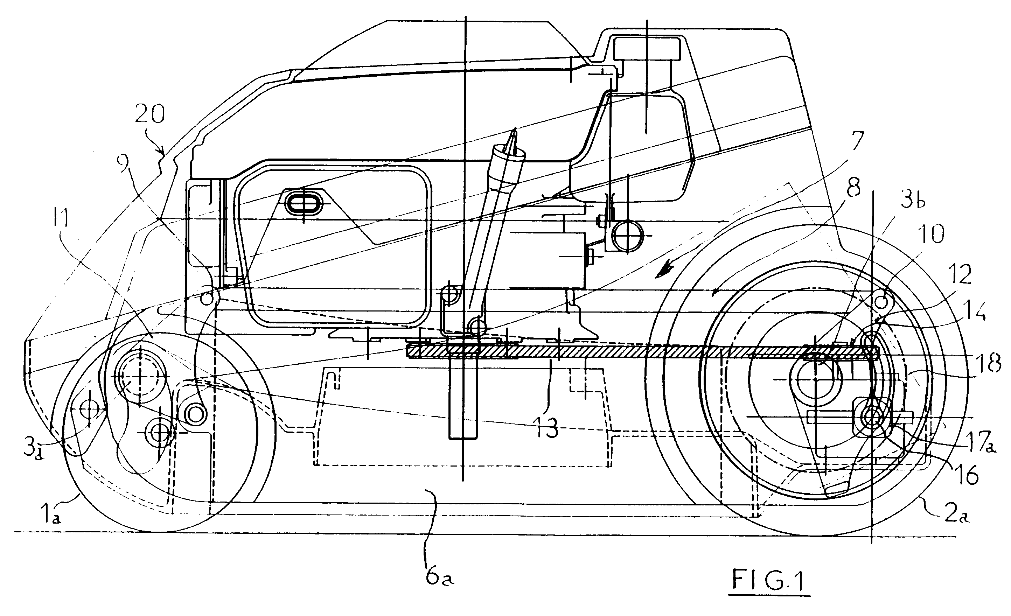

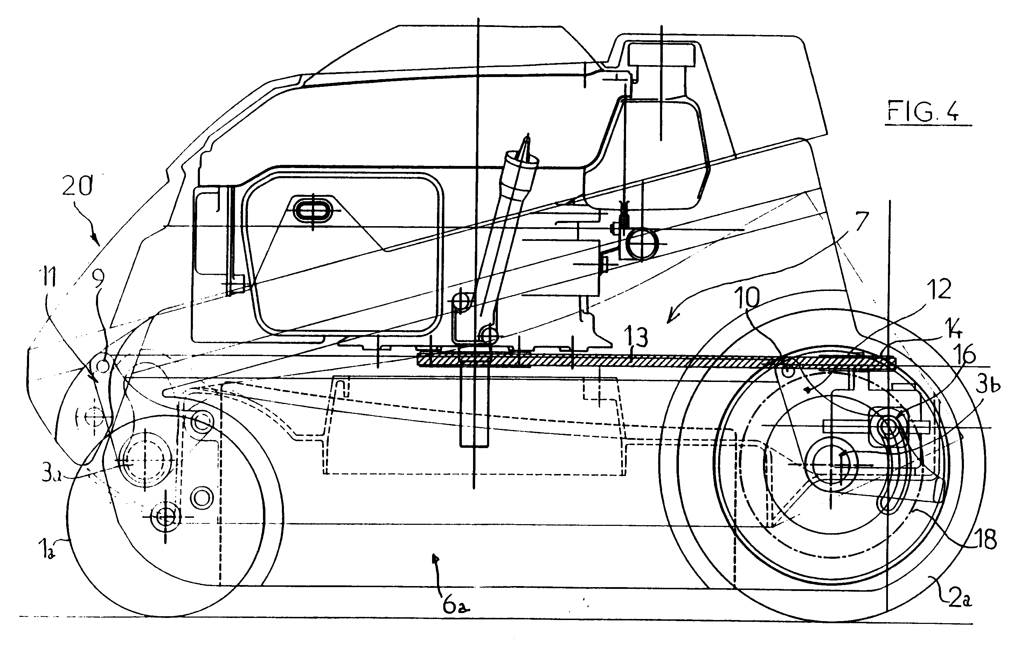

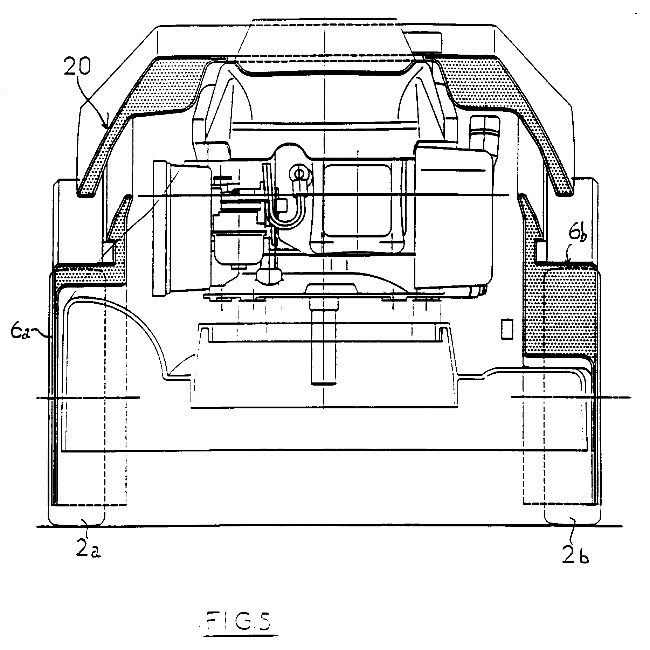

L'ensemble des moyens permettant de réaliser l'opération de coupe, à savoir le bloc moteur, la tête de coupe et la turbine ainsi que la transmission de puissance aux roues motrices (2a,2b), est monté sur un châssis secondaire ou plateau, désigné par la référence générale (7) et qui est déplaçable verticalement par rapport au châssis fixe supportant les roues (1a,1b, 2a,2b). Dans la forme de réalisation illustrée, ledit châssis mobile est constitué essentiellement de longerons (8), dont les extrémités (9,10) sont reliées au châssis fixe, dans le cas présent aux traverses (3a,3b), par l'intermédiaire de leviers basculants (11,12) pivotant autour desdites traverses (3a,3b), et dont le positionnement et les dimensions sont tels que le châssis mobile (7) puisse être déplacé verticalement, le point de pivotement entre le plateau et le levier se déplaçant en suivant la périphérie d'un cercle centré sur l'axe des roues motrices (2a,2b), et ce entre deux positions, l'une basse (figures 1 et 32) correspondant à la hauteur de coupe minimum, l'autre haute (figures 4 et 5) correspondant à une hauteur de coupe maximum.

En général, la distance minimale est de l'ordre de dix millimètres, alors que la distance maximale par rapport au sol est de l'ordre de soixante millimètres, en passant par toute position intermédiaire souhaitée.

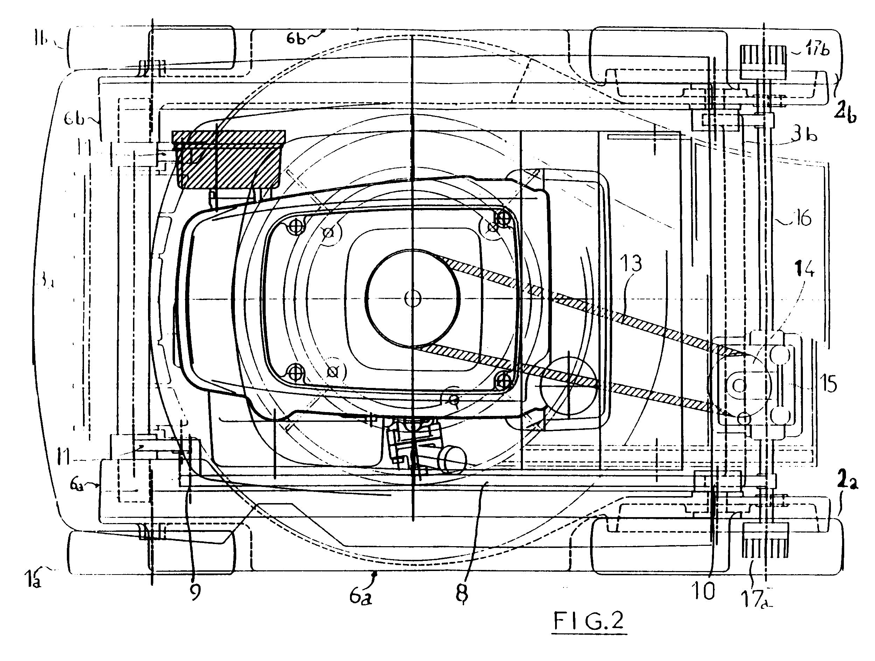

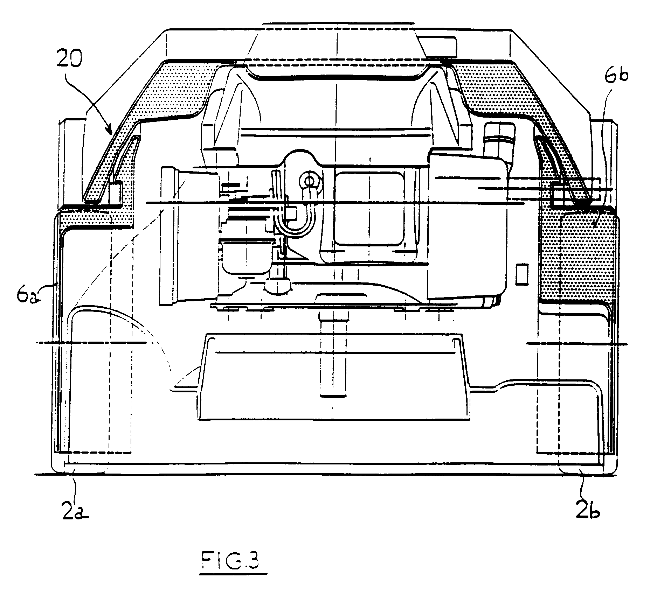

Selon l'invention, la transmission des mouvements aux roues motrices (2a,2b) est obtenue par l'intermédiaire d'une courroie (13) entraînée par l'arbre du moteur, et qui commande une poulie (14) (voir figure 2) qui, par l'intermédiaire d'un boitier (15), entraîne un arbre moteur (16) commandant les deux roues (2a,2b). L'entraînement des roues (2a,2b) est obtenu au moyen de pignons moteurs (17,a17b) prévus en bout de l'arbre (16), lesdits pignons étant en prise avec une couronne dentée (18), dont seul le cercle primitif a été représenté aux figures 1 et 4, couronne qui est disposée à l'intérieur de chaque roue motrice. Lesdits pignons (17a,17b) sont donc déplaçables avec le châssis mobile en suivant le diamètre primitif de ladite couronne dentée. Il est donc possible, grâce à un tel ensemble, non seulement de modifier pratiquement instantanément la hauteur de coupe entre deux positions extrêmes (comme illustré respectivement aux figures 1 et 2 et aux figures 4 et 5), ainsi que d'avoir une transmission très simple et efficace des roues motrices. De plus, on obtient une sécurité parfaite étant donné que les jupes latérales et les roues demeurent fixes par rapport au sol.

Enfin, comme cela ressort des schémas annexés, une telle conception permet d'avoir un ensemble insonorisé, étant donné qu'il est possible de rapporter autour des éléments fixés sur le châssis mobile un capot (20), également en forme de caisson, capot conçu, pour en coopération avec la partie supérieure des jupes latérales, assurer une bonne insonorisation ainsi qu'une protection, notamment du moteur et du pot d'échappement que comporte un tel ensemble, tout en permettant une ventilation.

Enfin, le maintien en position du châssis mobile par rapport au châssis fixe, peut être réalisé par tous moyens appropriés (non représentés sur les schémas annexés), et qui peut être constitué par exemple par un système formant ressort, maintenant le châssis mobile en position normalement écartée par rapport au châssis fixe, l'abaissement étant obtenu en exerçant une pression, par exemple au moyen d'une poignée, les deux éléments étant immobilisés en position l'un par rapport à l'autre par tout système de verrouillage approprié.

Bien entendu, l'invention n'est pas limitée à l'exemple de réalisation décrit précédemment, mais elle en couvre toutes les variantes réalisées dans le cadre défini par les revendications.

## Revendications

1. Tondeuse à gazon auto-tractée, constituée essentiellement d'un châssis support fixe monté sur des roues (1a,1b ; 2a,2b) permettant d'en assurer les déplacements et sur lequel sont montés l'ensemble des organes permettant de réaliser l'opération de coupe, et dans lequel :
- les roues (1a,1b ; 2a,2b) sont entourées au moins sur les deux faces latérales de la tondeuse par des jupes protectrices (6a,6b), fixes, qui s'étendent pratiquement jusqu'au niveau du sol ;
- des moyens permettent de positionner les organes de coupe en hauteur par rapport au sol, et ce entre deux positions, l'une basse correspondant à une hauteur de coupe minimum, l'autre haute à une hauteur de coupe maximum ;
***caractérisée*** en ce que :
- les jupes protectrices (6a,6b) sont solidaires du châssis support fixe ;
- le réglage de la hauteur de coupe est réalisé en déplaçant verticalement par rapport au châssis support fixe supportant les roues (1a,1b ; 2a,2b) l'ensemble des moyens permettant de réaliser l'opération de coupe, à savoir bloc moteur, tête de coupe et turbine, transmission aux roues motrices, ensemble qui est monté sur un châssis ou plateau mobile (7), déplaçable verticalement par rapport au châssis support fixe supportant les roues (1a,1b) ; 2a,2b), la liaison entre ces éléments étant réalisée par l'intermédiaire de leviers basculants (11,12) pivotant sur le châssis support fixe, et permettant de déplacer verticalement le châssis ou plateau mobile (7) par rapport au châssis support fixe supportant les roues, le point de pivotement (10) entre le châssis ou plateau mobile (7) et le levier (12) se deplaçant en suivant la périphérie d'un cercle centré sur l'axe des roues motrices ;
- la transmission du mouvement aux roues motrices (2a,2b) est réalisée par l'intermédiaire d'un pignon moteur (17a,17b) en prise avec une couronne dentée (18) disposée à l'intérieur d chaque roue motrice et déplaçable avec le châssis ou plateau mobile (7) en suivant le diamètre primitif de la couronne dentée (18).

2. Tondeuse à gazon selon la revendication 1, caractérisée en ce que le châssis support fixe et le châssis mobile (7) sont maintenus normalement écartés l'un de l'autre en position relevée sous l'action d'un ressort ou vérin, l'abaissement étant obtenu au moyen d'un ensemble actionné par l'utilisateur, comprimant ledit ressort ou vérin.

3. Tondeuse à gazon selon l'une des revendications 1 et 2, caractérisée en ce que les jupes latérales (6a,6b) sont réalisées sous forme de caissons insonorisants, les éléments placés sur le châssis mobile étant entourés par un capot, également sous forme d'un caisson insonorisant qui vient s'emboiter autour de la partie supérieure des jupes latérales fixes.

## Claims

1. Self-propelled lawnmover, essentially consisting of a fixed support chassis mounted on wheels (1a,1b - 2a,2b) allowing the displacements thereof to be ensured, and on which the set of members allowing the cutting operation to be performed are mounted, and in which :
- the wheels (1a,1b ; 2a,2b) are surrounded, at least on the two lateral faces of the mower, by fixed protective skirts (6a,6b) which extend practically as far as ground level ;
- means allow the cutting members to be positioned vertically with respect to the ground, namely between two positions : a low position corresponding to a minimum cutting height, and the other a high position at a maximum cutting height ;
characterized in that :
- the protective skirts (6a,6b) are forming one piece with the fixed support chassis ;
- the cutting height is adjusted by vertically displacing, with respect to the fixed chassis supporting the wheels (1a,1b ; 2a, 2b), the assembly of means allowing the cutting operation to be carried out, namely engine block, cutting head and turbine, transmission to the drive wheels, which is mounted on a chassis or movable platform (7) which can be moved vertically with respect to the fixed support chassis supporting the wheels (1a,1b ; 2a,2b), the link between these elements being produced by means of tilting levers (11,12) pivoting on the fixed support chassis, and allowing the chassis or movable platform (7) to be displaced vertically with respect to the fixed support chassis supporting the wheels, the pivoting point (10) between the chassis or movable platform (7) and the lever (12) being move by following the outline of a circle centered on the axis of the drive wheels ;
- movement is transmitted to the drive wheels (2a,2b) by means of a drive gear (17a,17b) engaged with a ring gear (18) arranged inside each drive wheel and capable of being moved with the chassis or movable platform (7) along the pitch-circle diameter of the ring gear (18).

2. Lawnmover according to claim 1, characterized in that the fixed support chassis and the moving chassis (7) are normally kept apart from one another in the raised position under the action of a spring or jack, lowering being obtained by means of an assembly actuated by the user, compressing the said spring or jack.

3. Lawnmover according to one of claims 1 and 2, characterized in that the lateral skirts (6a,6b) are produced in the form of soundproofing box structures, the elements placed on the movable chassis being surrounded by a cover, also in the form of a soundproofing box structure, which fits around the upper part of the fixed lateral skirts.

## Patentansprüche

1. Selbstfahrender Rasenmäher, der im wesentlichen einen festen, auf zur Fortbewegung dienenden Rädern (1a, 1b; 2a, 2b) befestigten Trägerrahmen aufweist, auf dem die Gesamtheit der zur Durchfuhrung des Schneidevorganges vorgesehenen Einrichtungen befestigt ist, und bei dem:
- die Räder (1a, 1b; 2a, 2b) wenigstens auf den beiden Seitenflächen des Rasenmähers von festen Schutzverkleidungen (6a, 6b) umgeben sind, die sich fast bis zum Niveau des Bodens erstrecken;
- Mittel zum Einstellen der Höhe der Schneideorgane bezüglich des Bodens vorgesehen sind, und zwar zwischen zwei Positionen, nämlich einer unteren, einer minimalen Schnitthöhe entsprechenden, und einer oberen, einer maximalen Schnitthöhe entsprechenden Position;
dadurch gekennzeichnet, daß
- die Schutzverkleidungen (6a, 6b) einstückig mit dem festen Trägerrahmen ausgebildet sind;
- die Einstellung der Schnitthöhe durch ein vertikales Verstellen der Gesamtheit der Mittel zur Durchführung des Schneidevorgangs, nämlich des Motorblockes, des Schneidkopfes und der Turbine, sowie der Mittel zur Kraftübertragung auf die Antriebsräder erfolgt, und zwar bezüglich des festen, die Räder (1a, 1b; 2a, 2b) tragenden Trägerrahmens, wobei diese Gesamtheit auf einem bezüglich des festen, die Räder (1a, 1b; 2a, 2b) tragenden Trägerrahmens vertikal verstellbaren Rahmen oder einer bewegbaren Platte (7) befestigt ist, und wobei die Verbindung zwischen diesen Elementen über Schwenkhebel (11, 12) hergestellt ist, die verschwenkbar an dem festen Trägerrahmen angebracht sind, und die dazu vorgesehen sind, den Rahmen oder die bewegbare Platte (7) bezüglich des festen, die Räder tragenden Trägerrähmens vertikal zu verstellen, wobei sich der Drehpunkt (10) zwischen dem Rahmen oder der bewegbaren Platte (7) und dem Hebel (12) entlang eines um die Achse der Antriebsräder zentriert angeordneten Kreisumfangs verschiebt;
- die Übertragung von Bewegung auf die Antriebsräder (2a, 2b) über ein Antriebsritzel (17a, 17b) erfolgt, das im Eingriff mit einem Zahnkranz (18) steht, der im Inneren jedes Antriebsrades angeordnet ist, und das mit dem Rahmen oder der bewegbaren Platte (7) entlang des wirksamen Durchmessers des Zahnkranzes (18) verstellbar ist.

2. Rasenmäher nach Anspruch 1, dadurch gekennzeichnet, daß der feste Trägerrahmen und der bewegbare Rahmen (7) unter der Wirkung einer Feder oder eines Zylinders normalerweise in einer voneinander getrennten, angehobenen Lage gehalten werden, wobei das Absenken mittels einer durch den Benutzer betätigten Vorrichtung bewirkt wird, die die Feder oder den Zylinder zusammendrückt.

3. Rasenmäher nach einem der Ansprüche 1 oder 2, dadurch gekennzeichnet, daß die Seitenverkleidungen (6a, 6b) in Form von schalldämmenden Kästen ausgebildet sind, wobei die auf dem bewegbaren Rahmen angeordneten Elemente von einer ebenfalls in Form eines schalldämmenden Kastens ausgebildeten Abdeckung umgeben sind, die den oberen Bereich der festen Seitenverkleidungen umgreift.
